# EUROPEAN PATENT APPLICATION

(11) **EP 2 333 885 A1**
(43) Date of publication of application: **15.06.2011**
(21) Application number: 10815090.5
(22) Date of filing: 18.06.2010
(51) Int. Cl.: H01M 6/16, H01M 4/50, H01M 10/00

(54) **LITHIUM BATTERY**

(30) Priority: 11.09.2009 JP 2009210644
(71) Applicant: Panasonic Corporation, Kadoma-shi Osaka 571-8501 (JP)
(72) Inventor: MORIGAKI, Kenichi, Chuo-ku, Osaka-shi, Osaka 540-6207 (JP)
(74) Representative: TBK
(86) International application number: PCT/JP2010/004070
(87) International publication number: WO 2011/030487

(57) **Abstract**

Disclosed is a lithium battery including: a positive electrode including manganese dioxide as a positive electrode active material; a negative electrode including at least one selected from lithium metal and a lithium alloy, as a negative electrode active material; a porous insulating member interposed between the positive electrode and the negative electrode; and an organic electrolyte. The organic electrolyte contains 0.0008 to 1.2% by weight of an alkyl ester of an aliphatic hydroxycarboxylic acid. The alkyl ester may be a C₁₋₆ alkyl ester of an aliphatic hydroxycarboxylic acid having 2 to 7 carbon atoms, such as a C₁₋4 alkyl 4-hydroxybutyrate.

## Description

### [Technical Field]

The present invention relates to lithium batteries. More specifically, the present invention relates to an improvement of organic electrolytes used for lithium batteries (particularly for lithium primary batteries).

### [Background Art]

Lithium batteries using organic electrolytes have high voltages and high energy densities as compared to aqueous batteries using aqueous solutions of supporting salts as electrolytes, and therefore, can be easily reduced in size and weight. Further, lithium batteries are less susceptible to deterioration due to self-discharge and the like and excellent in long-term reliability as compared to aqueous batteries. For these reasons, lithium batteries are used for various purposes as a main power source for small electronic devices, a backup power source, and the like.

A typical lithium battery (a primary or secondary battery) is provided with a negative electrode including metallic lithium or a lithium alloy as a negative electrode active material, a positive electrode including manganese dioxide as a positive electrode active material, and an organic electrolyte. The organic electrolyte generally includes a non-aqueous solvent and a supporting salt (a solute) dissolved in the non-aqueous solvent. The non-aqueous solvent is, for example, a mixed solvent of a solvent having a high dielectric constant, such as propylene carbonate (PC), and a solvent having a low melting point and a low viscosity such as 1,2-dimethoxyethane (DME) and 3-methyltetrahydrofuran (Me-THF). The supporting salt is, for example, a lithium salt, such as lithium perchlorate (LiClO₄) and lithium tetrafluoroborate (LiBF₄).

It is required for batteries used as a power source for small electronic devices to be excellent in intermittent large-current pulse discharge characteristics. Small electronic devices are exposed to high temperatures with comparatively high frequency.

However, when a lithium battery including manganese dioxide as the positive electrode active material is subjected to an intermittent large-current pulse discharge after having been exposed to high temperatures, it may happen that the internal resistance of the battery is abruptly increased and the discharge characteristics are significantly deteriorated. Because of this, in order to use a lithium battery including manganese dioxide as the positive electrode active material, as a main power source for small electronic devices, the large-current pulse discharge characteristics after storage at high temperatures must be improved.

A lithium battery including manganese dioxide as the positive electrode active material tends to generate gas inside the battery in a high temperature environment of 100°C or higher. In the gas generated inside the battery 90% or more is carbon dioxide. This is presumably mainly because the non-aqueous solvent in the organic electrolyte is oxidized and decomposed due to the manganese dioxide of the positive electrode active material, resulting in generation of carbon dioxide.

If gas is generated inside the battery the positive electrode, negative electrode, and battery case are deformed, which makes it difficult to ensure the electron conductivity and ion conductivity inside the battery As a result, discharge does not smoothly proceed any more even if there is a remaining battery capacity In particular, in a coin-type lithium battery the battery swells considerably in association with an increase in the internal pressure, which may result in a failure of normal discharge. Therefore, it is required to suppress the generation of gas in a high temperature environment.

With regard to the organic electrolyte, various studies have been made for the purpose of improving the battery storage characteristics. For example, Patent Literature 1 discloses adding to the organic electrolyte at least one compound selected from the group consisting of a sulfone compound, a sulfoxide compound, and a sulfolane compound. This inhibits a decomposition reaction of the solvent in the electrolyte to some extent, and therefore, an increase in internal resistance is suppressed even if the battery is stored for a long period of time.

Patent Literature 2 discloses adding to the organic electrolyte a sultone derivative such as 1,3-propane sultone, thereby to form a coating film on the surface of the positive electrode and thus to inhibit a decomposition reaction of the solvent in the electrolyte and suppress generation of gas associated therewith. Patent Literature 2 further discloses using as the non-aqueous solvent a mixed solvent of a carbonic acid ester and an ether, both having a boiling point of 120°C or higher, thereby to suppress an increase in battery internal pressure at high temperatures that may occur in association with gasification of the solvent. Therefore, even when the battery is stored at a high temperature of about 100°C, the swelling thereof is suppressed.

### [Citation List]

[Patent Literature]
[PTL 1] Japanese Laid-Open Patent Publication No. 2000-285928
[PTL2] Japanese Laid-Open Patent Publication No. 2005-216867

### [Summary of Invention]

### [Technical Problem]

Patent Literature 1 intends to improve the storage characteristics at room temperature, and it is difficult under the conditions of high temperatures, such as the condition in which the environmental temperature during storage reaches 100°C, to suppress sufficiently the generation of gas and the increase in internal resistance. Therefore, it is difficult to ensure discharge characteristics, particularly, large-current pulse discharge characteristics, in a high temperature environment or after exposure to high temperatures.

In Patent Literature 2, if the content of the sultone derivative is increased in order to suppress the generation of gas, the internal resistance is increased, and therefore, it is difficult to ensure large-current discharge characteristics.
In view of the above, the prevent invention intends to provide a lithium battery being capable of suppressing generation of gas due to decomposition of the organic electrolyte even when the battery is stored, for example, at a temperature as high as 100°C and being excellent in large-current discharge characteristics after having been stored at high temperatures.

### [Solution to Problem]

The present inventor conducted intensive studies in order to solve the above problems. As a result, it was found that the use of an organic electrolyte containing an alkyl ester of an aliphatic hydroxycarboxylic acid can suppress generation of gas and an increase in battery internal pressure due to a side reaction between the manganese dioxide and the non-aqueous solvent in the organic electrolyte in a high temperature environment, and thus suppress an increase in internal resistance associated therewith.

Specifically, one aspect of the present invention relates to a lithium battery including: a positive electrode including manganese dioxide as a positive electrode active material; a negative electrode including at least one selected from lithium metal and a lithium alloy, as a negative electrode active material; a porous insulating member interposed between the positive electrode and the negative electrode; and an organic electrolyte. The organic electrolyte contains 0.0008 to 1.2% by weight of an alkyl ester of an aliphatic hydroxycarboxylic acid.

While the novel features of the invention are set forth particularly in the appended claims, the invention, both as to organization and content, will be better understood and appreciated, along with other objects and features thereof, from the following detailed description taken in conjunction with the drawings.

### [Advantageous Effects of Invention]

According to the preset invention, it is possible to suppress decomposition of the non-aqueous solvent in an organic electrolyte even in a high temperature environment, and thus to remarkably suppress generation of gas and an increase in battery internal pressure associated therewith. As a result, battery swelling is suppressed, and thus, an increase in internal resistance is suppressed. Therefore, it is possible to provide a lithium battery capable of exhibiting excellent large-current discharge characteristics even after having been exposed to high temperatures.

### [Brief Description of Drawing]

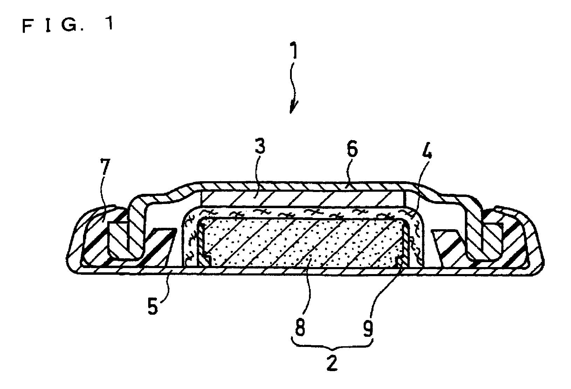

[Fig. 1] A schematic longitudinal cross-sectional view of a coin-type lithium battery according to one embodiment of the present invention.

### [Description of Embodiment]

A lithium battery of the present invention includes: a positive electrode including manganese dioxide as a positive electrode active material; a negative electrode including at least one selected from lithium metal and a lithium alloy, as a negative electrode active material; a porous insulating member interposed between the positive electrode and the negative electrode; and an organic electrolyte. The lithium battery of the present invention is useful as a primary battery

One embodiment of the lithium battery of the present invention is described with reference to Fig. 1. Fig. 1 is a schematic longitudinal cross-sectional view of a coin-type lithium battery 1.
As shown in Fig. 1, the lithium battery 1 is provided with: a power generation element including a positive electrode complex 2, a negative electrode 3 including a negative electrode active material, and a separator 4 (a porous insulating member) interposed between the positive electrode complex 2 and the negative electrode 3, and an organic electrolyte (not shown); and a battery case accommodating the power generation element. The battery case includes a positive electrode case 5 electrically connected to the positive electrode complex 2, and a negative electrode case 6 electrically connected to the negative electrode 3. The lithium battery 1 is further provided with an electrically insulating packing 7 being disposed at the position where the positive electrode case 5 and the negative electrode case 6 are jointed to each other and serving to provide to sealing therebetween.

The positive electrode complex 2 includes a positive electrode 8 in the shape of a disc including manganese dioxide as a positive electrode active material, and a positive electrode current-collecting ring 9 serving as a positive electrode current collector and being disposed in the periphery of the positive electrode 8. It should be noted that although the positive electrode current-collecting ring 9 is used in this embodiment, the positive electrode 8 may be disposed directly on the inner bottom surface of the positive electrode case 5 without using the positive electrode current-collecting ring 9.

In the present invention, an alkyl ester of an aliphatic hydroxycarboxylic acid (hereinafter may be simply referred to as an "aliphatic hydroxycarboxylic acid ester") is added as a first additive to the organic electrolyte. This results in formation of a coating film on the surface of the positive electrode, which inhibits a side reaction involving gas generation between the manganese dioxide in the positive electrode and the non-aqueous solvent in the organic electrolyte. The side reaction is particularly evident in a high temperature environment of 100°C or higher. However, according to the present invention, the side reaction can be effectively inhibited even in such a high temperature environment. Therefore, the generation of gas is significantly suppressed, and thus the increase in battery internal pressure (and the battery swelling) and the increase in internal resistance associated therewith can be suppressed.

The addition of an aliphatic hydroxycarboxylic acid ester forms an adequate coating film on the surface of the positive electrode. The formed coating film also serves to prevent the internal resistance from being increased more than needed. As described above, according to the present invention, it is possible to effectively suppress the increase in internal resistance, and thus to obtain excellent large-current discharge characteristics (particularly, large-current pulse discharge characteristics) even after the battery has been exposed to high temperatures. In other words, the lithium battery of the present invention has excellent high-temperature storage characteristics.

### (Organic electrolyte)

The organic electrolyte contains a non-aqueous solvent, a lithium salt, and an aliphatic hydroxycarboxylic acid ester as a first additive.

Examples of an aliphatic hydroxycarboxylic acid corresponding to the aliphatic hydroxycarboxylic acid ester includes aliphatic hydroxycarboxylic acids having 2 to 10 carbon atoms, such as lactic acid, glycolic acid, glyceric acid, tartaric acid, citric acid, 2-, 3- or 4-hydroxybutyric acid, 2-hydroxyisobutyric acid, and 2-, 3-, 4- or 5-hydroxyvaleric acid. The number of carbon atoms in the aliphatic hydroxycarboxylic acid is preferably from 2 to 7, and more preferably from 2 to 5.

The number of hydroxyl groups and the number of carboxyl groups in the aliphatic hydroxycarboxylic acid are not particularly limited, and may be, for example, each from 1 to 3, and preferably from 1 or 2. The position of a hydroxyl group relative to a carboxyl group is not particularly limited, and a hydroxyl group may be on a carbon atom having a carboxyl group. A carboxyl group and a hydroxyl group may be on different carbon atoms. In an aliphatic hydroxycarboxylic acid of a preferred embodiment, a hydroxyl group is on a carbon atom which is not adjacent to the carbon atom having a carboxyl group. A preferred hydroxybutyric acid is 4-hydroxybutyric acid, and a preferred hydroxyvaleric acid is 4- or 5-hydroxyvaleric acid.

In a hydroxycarboxylic acid ester being derived from a hydroxycarboxylic acid having two or more carboxyl groups, all of the carboxyl groups may have been esterified, or some of them may have been esterified.

Examples of an alkyl group corresponding to the alkyl ester of an aliphatic hydroxycarboxylic acid include linear or branched chain C₁₋₁₀ alkyl groups, such as methyl, ethyl, n-propyl, isopropyl, n-butyl, sec-butyl, tert-butyl, n-pentyl, and n-hexyl groups. Preferred examples among these are C₁₋₆ alkyl groups, and particularly preferred examples are C₁₋₄ alkyl groups.

Examples of the alkyl ester of an aliphatic hydroxycarboxylic acid include C₁₋₆ alkyl esters of an aliphatic hydroxycarboxylic acid having 2 to 7 carbon atoms, such as ethyl lactate, ethyl glycolate, monomethyl tartrate, dimethyl tartrate, methyl hydroxybutyrate, ethyl hydroxybutyrate, propyl hydroxybutyrate, butyl hydroxybutyrate, and ethyl hydroxyvalerate. Among these, C₁₋₄ alkyl hydroxybutyrates are preferred in terms of stable formation of a coating film on the surface of the positive electrode, and suppression of oxidative decomposition of the non-aqueous solvent. In particular, C₁₋₄ alkyl 4-hydroxybutyrates, such as methyl 4-hydroxybutyrate, ethyl 4-hydroxybutyrate, and butyl 4-hydroxybutyrate, are preferred because they easily dissolve in an organic electrolyte and cause less polarization at the negative electrode during discharge.

These aliphatic hydroxycarboxylic acid esters may be used singly or in combination of two or more.

The percentage of the aliphatic hydroxycarboxylic acid ester(s) in the organic electrolyte is 0.008 to 1.2% by weight, preferably 0.001 to 1 % by weight, and more preferably 0.05 to 0.5% by weight or 0.1 to 0.5% by weight. When the percentage is within the above range, if the battery is exposed to high temperatures, the generation of gas associated with a side reaction between the positive electrode active material and the solvent in the organic electrolyte can be effectively suppressed without sacrificing the large-current discharge characteristics. When the percentage is too low, the generation of gas in a high temperature environment cannot be sufficiently suppressed. When the percentage is too high, there is a possibility that the discharge characteristics are deteriorated. For example, the polarization at a lithium-containing negative electrode tends to increase during discharge.

A coating film derived from the aliphatic hydroxycarboxylic acid ester is formed on the surface of the positive electrode in association with discharge of the lithium battery Accordingly, the percentage of the aliphatic hydroxycarboxylic acid ester in the organic electrolyte is lowered as the discharge proceeds. It should be noted, therefore, that the above percentage of the aliphatic hydroxycarboxylic acid ester(s) is a value when the lithium battery is in a state of charge (SOC) of 90% or more (90 to 100%), for example, when the lithium battery is in a non-discharged state or ready for shipment (or in an initial state).

The organic electrolyte may further contain at least one additive (a second additive) selected from an aromatic sulfone compound and a cyclic sultone compound.
Examples of the aromatic sulfone compound include C₁₋₆ alkyl esters of C₆₋₁₀ arenesulfonic acids, such as ethyl benzenesulfonate and butyl benzenesulfonate; and alkyl esters of aromatic sulfonic acids, such as methyl toluenesulfonate (e.g., C₁₋₆ alkyl esters of C₆₋₁₀ arenesulfonic acids having one to three C₁₋₃ alkyl groups on an arene ring). Preferred examples among these are C₁₋₃ alkyl esters of C₆₋₁₀ arenesulfonic acids, and C₁₋₃ alkyl esters of C₁₋₂ alkyl-C₆₋₁₀ arenesulfonic acids.

Examples of the cyclic sultone compound include: cyclic sultones having 2 to 8 carbon atoms, such as 1,3-propane sultone, 1,4-butane sultone, and pentane-2,5-sultone; and compounds in which an aromatic ring is bonded to these cyclic sultones through condensation (e.g., naphthalene-1,8-sultone). Among these, cyclic sultones having 3 to 6 carbon atoms are preferred.
These aromatic sulfone compounds and/or cyclic sultone compounds may be used singly or in combination of two or more.

By adding the second additive, the generation of gas in a high temperature environment can be more effectively suppressed. Although the reason for this is unclear, it is presumably because the second additive and the aliphatic hydroxycarboxylic acid ester act through different mechanisms to inhibit a side reaction between the manganese dioxide and the organic electrolyte in a high temperature environment. Specifically, the addition of the first additive inhibits a side reaction mainly on the surface of the positive electrode, while the addition of the second additive inhibits a side reaction on the surfaces of the positive electrode and the negative electrode. It is considered, therefore, that the use of the first and second additives in combination synergistically enhances the gas generation suppressing effect.

The percentage of the second additive relative to the whole organic electrolyte is 0.1 to 3% by weight, and preferably 0.5 to 2% by weight. When the percentage of the second additive exceeds 3% by weight, the discharge characteristics may be deteriorated.
The above percentage of the second additive is a value when the lithium battery is in a state of charge (SOC) of 90% or more (90 to 100%), for example, when the lithium battery is in a non-discharged state or ready for shipment (or in an initial state).

In addition to the first additive and, as needed, the second additive, the organic electrolyte includes a non-aqueous solvent and a lithium salt (a solute or supporting salt) dissolved in the non-aqueous solvent.
Examples of the non-aqueous solvent include: cyclic carbonates such as ethylene carbonate (EC), propylene carbonate (PC), and butylene carbonate (BC); chain carbonates such as dimethyl carbonate (DMC), diethyl carbonate (DEC), and ethyl methyl carbonate (EMC); cyclic ethers such as 1,4-dioxane, 1,3-dioxolane, 2-methyltetrahydrofuran, and 3-methyltetrahydrofuran; chain ethers (e.g., dialkoxy alkanes) such as 1,2-dimethoxyethane (DME) and 1,3-dimethoxypropane; and lactones such as γ-butyrolactone. These non-aqueous solvents may be used singly or in combination of two or more. Preferred examples among these non-aqueous solvents include: cyclic carbonates, chain carbonates, cyclic ethers, and chain ethers; and mixed solvents of these.

The non-aqueous solvent preferably includes a solvent having a relative dielectric constant (20°C) of 20 or more (hereinafter, a "high-dielectric constant solvent"), in view of the solubility of a lithium salt therein. Examples of the high-dielectric constant solvent include cyclic carbonates such as EC, PC and BC. These high-dielectric constant solvents may be used singly or in combination of two or more.
The ion conductivities of high-dielectric constant solvents at low temperatures are comparatively low. For example, EC has a melting point of as high as about 40°C, and therefore, the ion conductivity thereof at low temperatures is low. For this reason, it is preferable to use as the non-aqueous solvent, a mixed solvent of a high-dielectric constant solvent and a solvent having a low melting point and a low viscosity

Examples of the solvent having a low melting point and a low viscosity include: chain carbonates such as DMC, DEC, and EMC; cyclic ethers such as 1,3-dioxolane and 2-methyltetrahydrofuran, 3-methyltetrahydrofuran; and chain ethers such as DME. These solvents having a low melting point and a low viscosity may be used singly or in combination of two or more.
The melting point and the viscosity at 25°C of the solvent having a low melting point and a low viscosity are, for example, -30°C or lower and 0.001 Pa·s or less, respectively.

In view of the ion conductivity at low temperatures, it is preferably to use EC and/or PC as the high-dielectric constant solvent in combination with a chain ether such as DME. The non-aqueous solvent preferably contains EC, PC and DME in an amount of 10% by volume or more (10 to 100% by volume) in total.

In the case of using the high-dielectric constant solvent (A) in combination with the solvent (B) having a low melting point and a low viscosity the ratio (A)/(B) (by weight) can be selected, as appropriate, from the range of 10/90 to 60/40, preferably 20/80 to 55/45, and further preferably 25/75 to 40/60. When the high-dielectric constant solvent (A) is EC, the ratio (A)/(B) (by weight) is, for example, 10/90 to 40/60, and preferably 15/85 to 35/65.

Examples of the lithium salt include lithium hexafluorophosphate (LiPF₆), lithium tetrafluoroborate (LiBF₄), lithium perchlorate (LiClO₄), Lithium trifluoromethanesulfonate (LiCF₃SO₃), lithium-bis(trifiuoromethylsulfonyl)imide (LiN(SO₂CF₃)₂), and lithium-bis(pentafluoroethylsulfonyl)imide (LiN(SO₂C₂F₅)₂). These lithium salts may be used singly or in combination of two or more.
The concentration of the lithium salt(s) in the organic electrolyte is preferably 0.3 to 1.5 mol/L, and more preferably 0.5 to 1 mol/L.

### (Positive electrode)

The positive electrode includes manganese dioxide as a positive electrode active material. Manganese dioxide is classified into various types according to the crystal structure, such as a type (hollandite type), β type (rutile type), γ type, δ type, and type (spinel type). For example, a highly pure manganese dioxide obtained by using an electrochemical technique in a conventional manner (an electrolytic manganese dioxide) mainly has a γ-type crystal structure.

In many cases, manganese dioxide has two or more of the above-listed types of crystal structures. Examples of the manganese dioxide having two or more crystal structures include a γ-β-type manganese dioxide and a λ-β-type manganese dioxide. Manganese dioxide having a desired crystal structure can be prepared by selecting the type of raw material, the production method, the production conditions, and the like, as appropriate.
The crystal structure of manganese dioxide can be identified by, for example, a powder X-ray diffractometry using CuKα1 radiation, on the basis of the positions of peaks in a diffraction pattern.

A preferred manganese dioxide used in the present invention is a γ-β-type manganese dioxide having crystal structures of γ and β crystals.
The γ-β-type manganese dioxide is prepared by baking a manganese dioxide mainly having a γ-type crystal structure at a comparatively low temperature for a comparatively short period of time. The baking causes the bound water present in the manganese dioxide to be removed, and some of the γ-type crystals to be transformed into β-type crystals. The baking can be performed in one stage. As such, neither many processes nor a long production time is needed, which is advantageous in production cost.

Specifically, the γ-β-type manganese dioxide can be easily prepared by baking, for example, a manganese dioxide mainly having a γ-type crystal structure. The baking temperature is preferably 300 to 450°C, and more preferably 350 to 440°C. The baking time is preferably 3 hours or longer (for example, 3 to 24 hours), more preferably 4 hours or longer, and, for example, 4 to 24 hours. The baking is usually performed in an oxidizing atmosphere, for example, in air or in an oxidative gas atmosphere (e.g., in an oxygen atmosphere).

When the baking temperature is too low, there is a possibility that the bound water present in the manganese dioxide is not removed sufficiently. If the bound water remains in the manganese dioxide and the amount of water in the battery is increased, the water reacts with lithium in the negative electrode. This results in generation of a large amount of hydrogen gas, possibly causing swelling or deformation of the battery When the baking temperature is too high, the amount of β crystals contained in the manganese dioxide is increased more than needed. As a result, the specific surface area may be drastically reduced, and the discharge capacity may be significantly decreased.

Examples of the manganese dioxide having a γ-type crystal structure to be used as a raw material include: a chemically-synthesized manganese dioxide prepared by baking natural ramsdellite, ground manganese carbonate or manganese sulfate, and treating the baked material with an acid, as needed; and an electrolytic manganese dioxide prepared by a known method. An electrolytic manganese dioxide is available from, for example, Tosoh Corporation. Among these manganese dioxides, an electrolytic manganese dioxide is preferred because it is highly pure and has a stable γ-type crystal structure.

The manganese dioxide may further contain one or more other elements (e.g., Na, Mg, Mn, Fe, Co, Ni, Cu, Zn, Al, and B). In view of improving the high temperature resistance (or the heat resistance), the manganese dioxide preferably contains at least one selected from the group consisting of boron and magnesium.
The use of a γ-β-type manganese dioxide (in particular, a manganese dioxide to which both boron and magnesium are added) in combination with an organic electrolyte containing the above-described first additive remarkably improves the high temperature storage characteristics of the battery. As such, the generation of gas in a high temperature environment is suppressed, and the discharge characteristics of the battery are not deteriorated even after having been exposed to high temperatures.

The boron and magnesium may be present in such a state that they adhere on the surfaces of the manganese dioxide particles, or are locally distributed near the surfaces thereof, but are preferably contained in the manganese dioxide in such a state that they are diffused or permeated into the particles thereof. The boron and magnesium may not be evenly diffused or permeated, but preferably, are evenly diffused or permeated. When boron and magnesium are added in large amounts, part of them may be locally present near the surfaces.

The mechanism through which the addition of boron and magnesium to the manganese dioxide improves the high-temperature resistance of the manganese dioxide is not clear. Presumably, the specific surface area, oxidation number of manganese, chemical activity and the like of the manganese dioxide are reduced, and thus the generation of gas in a high temperature environment is suppressed.

In view of more effectively suppressing the generation of gas in a high temperature environment, the boron content in the γ-β-type manganese dioxide, is, for example, 0.1 to 3% by weight, preferably, 0.5 to 2% by weight, and more preferably 0.8 to 1.4% by weight. In a similar point of view, the magnesium content is, for example, 0.1 to 5% by weight, preferably, 0.2 to 3% by weight, and more preferably 0.5 to 2% by weight. It should be noted that these contents are percentages by weight to the total of the amounts of the manganese dioxide, boron, and magnesium. The contents of boron and magnesium in the manganese dioxide can be measured by, for example, an element analysis such as ICP emission spectrometry

When the boron content is too large, there is a possibility that the specific surface area of the manganese dioxide becomes too small, and the crystallinity thereof is greatly reduced. This can suppress the generation of gas in a high temperature environment, but causes the polarization at the negative electrode during battery discharge to increase. As a result, lt, it may happen that the discharge voltage drops, and the discharge capacity is decreased. When the magnesium content is too large, there is a possibility that the manganese dioxide is easily reduced, and thus, the discharge capacity is decreased.

The γ-β-type manganese dioxide containing one or more other elements such as boron and magnesium can be prepared by adding a compound containing another element (e.g., a boron compound and a magnesium compound) to the manganese dioxide having a γ-type crystal structure serving as a raw material, in the above-described production of v-l3-type manganese dioxide. Examples of a compound containing another element include, without particular limitation, oxides or hydrates thereof, nitrides, carbides, and salts (e.g., inorganic acid salts, organic acid salts, inorganic base salts, and organic base salts).

Examples of the boron compound include boron oxide and boric acids (e.g., orthoboric acid, metaboric acid, and condensed boric acid; and salts or esters of these boric acids). These boron compounds may be used singly or in combination of two or more.
The amount of the boron compound(s) to be used may be selected as appropriate so that the boron content in the manganese dioxide obtained after baking falls within the forgoing range. The boron compound(s) is added in an amount of, for example, about 1 to 12% by weight of the total of the amounts of the manganese dioxide used as a raw material, the boron compound(s), and the magnesium compound(s).

Examples of the magnesium compound include magnesium oxide, magnesium hydroxide, and inorganic acid salts such as magnesium carbonate. These magnesium compounds may be used singly or in combination of two or more.
The amount of the magnesium compound(s) to be used may be selected as appropriate so that the magnesium content in the manganese dioxide obtained after baking falls within the forgoing range. The magnesium compound(s) is added in an amount of, for example, about 1 to 15% by weight of the total of the amounts of the manganese dioxide used as a raw material, the boron compound(s), and the magnesium compound(s).

The X-ray diffraction pattern obtained by a powder X-ray diffractometry using CuKα radiation of a γ-β-type manganese dioxide to which boron and magnesium are added resembles that of a γ-β-type manganese dioxide to which neither boron nor magnesium is added. For the X-ray diffraction pattern of a γ-β-type manganese dioxide to which neither boron nor magnesium is added, for example, "Handbook of Batteries 3rd Edition", edited by Matsuda and Takehara, Maruzen, 2001, p. 120 can be referred to.

A γ-β-type manganese dioxide to which boron and magnesium are added exhibits a diffraction pattern having a broader peak and a smaller peak intensity In other words, the addition of boron and magnesium lowers the crystallinity of the γ-β-type manganese dioxide. More specifically, in a diffraction pattern obtained by a powder X-ray diffractometry using CuKα radiation of a γ-β-type manganese dioxide containing boron and magnesium, the ratio [I(110)/I(101)] of the peak intensity I(110) of a (110) plane diffraction peak located around 2θ = 28°to the peak intensity (101) of a (101) plane diffraction peak located around 2θ = 37.5 ° is 0.5 to 0.58.

The average particle size (i.e., the median size in a volume-based particle size distribution) of a γ-β-type manganese dioxide is, for example, 15 to 60 µm, and preferably 20 to 50 µm. The BET specific surface area of a γ-β-type manganese dioxide is, for example, 5 to 35 m²/g, and preferably 8 to 30 m²/g. By using a γ-β-type manganese dioxide having an average particle size and/or a BET specific surface area within the foregoing ranges, the polarization at the positive electrode during discharge at a large current can be more effectively suppressed, and therefore, it is unlikely that a coating film is formed more than needed, causing no deterioration in discharge characteristics. The average particle size and/or the BET specific surface area within such ranges are advantageous in suppressing the generation of gas.

The BET specific surface area can be adjusted by selecting as appropriate the type of a manganese dioxide having a γ-type crystal structure to be used as a raw material, the blending ratio of the manganese dioxide used as a raw material to the boron compound and/or the magnesium compound, and other factors. In view of achieving an adequate BET specific surface area also, it is advantageous to use an electrolytic manganese dioxide as a raw material.

The positive electrode can be obtained by press-molding a powdered γ-β-type manganese dioxide into a desired shape according to the shape of the lithium battery Alternatively, the positive electrode may be formed by press-molding a positive electrode material mixture including a γ-β-type manganese dioxide together with a binder and a conductive material, as needed.

Examples of the binder include: fluorocarbon resins, such as polytetrafluoroethylene (PTFE), polyvinylidene fluoride (PVDF) and a modified form thereof, tetrafluoroethylene-hexafluoropropylene copolymer (FEP), tetrafluoroethylene-perfluoroalkyl vinylether copolymer (PFA), vinylidene fluoride-hexafluoro propylene copolymer, vinylidene fluoride-chlorotrifluoroethylene copolymer, ethylene-tetrafluoroethylene copolymer (ETFE resin), propylene-tetrafluoroethylene copolymer, ethylene-chlorotrifluoroethylene copolymer (ECTFE), and vinylidene fluoride-hexafluoropropylene-tetrafluoroethylene copolymer; rubber-like polymers, such as styrene-butadiene rubber (SBR) and modified acrylonitrile rubbers; and acrylic polymers, such as ethylene-acrylic acid copolymer. These binders may be used singly or in combination of two or more. The binder may be used in the form of a dispersion in which the binder is dispersed in a dispersion medium.

Examples of the conductive material include: carbon blacks, such as acetylene black, Ketjen black, channel black, furnace black, lamp black, and thermal black; various graphites, such as natural graphite and artificial graphite; conductive fibers, such as carbon fibers and metal fibers. These conductive materials may be used singly or in combination of two or more.
A thickener may be used as needed. Examples of the thickener include ethylene-vinyl alcohol copolymers and cellulose derivatives (e.g., carboxymethylcellulose and methylcellulose).

In the present invention, the positive electrode may be used in combination with a positive electrode current collector, as a positive electrode complex. The positive electrode current collector may be made of, for example, aluminum, an aluminum alloy or stainless steel.
The shape of the positive electrode current collector may be selected, as appropriate, according to the shape of the lithium battery and other factors. For example, it may be the shape of a sheet, a disc, or a ring. The cross-sectional shape of a ring-like positive electrode current collector is not limited to the shape of the letter "L" as shown in Fig. 1, and may be other shapes such as the shape of the letter "I".

The positive electrode complex may be formed by mounting or arranging a positive electrode, which has been molded in advance, on the positive electrode current collector. For example, a press-molded positive electrode is fitted into a ring-like positive electrode current collector, whereby a positive electrode complex can be formed.
Alternatively, the positive electrode complex may be formed by press-molding a powdered γ-β-type manganese dioxide or a positive electrode material mixture including the same on the surface of the positive electrode current collector. For example, a γ-β-type manganese dioxide or a positive electrode material mixture including the same is filled inside the ring of a ring-like positive electrode current collector, and then molding it, whereby a positive electrode complex can be formed.

### (Negative electrode)

The negative electrode may be any one as long as it contains lithium and/or a lithium alloy as a negative electrode active material, and may be configured such that a lithium layer or a lithium alloy layer is formed on the surface of a sheet-like negative electrode current collector made of, for example, copper or stainless steel. In a preferred embodiment, the negative electrode is composed only of a negative electrode active material (e.g., a lithium metal plate or a lithium alloy plate).

An example of the lithium alloy is an alloy of lithium and at least one metal selected from the group consisting of aluminum, tin, magnesium, indium and calcium. The amount of metal(s) other than lithium in the lithium alloy is, for example, 0.1 to 3% by weight, and preferably 0.5 to 2.5% by weight.

The shape of the negative electrode may be selected, as appropriate, according to the shape of the lithium battery and other factors, and may be, for example, the shape of a sheet or a disc.

### (Separator)

The separator may be any one as long as it can be used in a lithium battery and may be, for example, a microporous film made of polyolefin, or alternatively, a woven fabric or nonwoven fabric. Examples of the polyolefin contained in the microporous film include polyethylene, polypropylene, and ethylene-propylene copolymers. Examples of the resin constituting the woven fabric or nonwoven fabric include: polyolefins, such as polypropylene (PP); polyphenylene sulfide (PPS); aromatic polyesters, such as aramids; polyimide resins, such as polyimides and polyamide-imides; and polyether ether ketones (PEEK). The woven fabric or nonwoven fabric may contain these resins singly or in combination. Preferred among these is a resin nonwoven fabric having excellent durability in a high temperature environment (e.g., polyphenylene sulfide nonwoven fabric).

The thickness of the separator is, for example, 30 to 250 µm, and preferably 50 to 200 µm, depending on the shape or size of the lithium battery

The lithium battery of the present invention can be fabricated by, for example, putting a positive electrode, a negative electrode, a separator interposed between the positive electrode and the negative electrode, and an organic electrolyte into a battery case. The fabrication method is not particularly limited, and any known method may be employed according to the shape, structure, intended use or sealing type of the lithium battery The lithium battery may be of any shape without particular limitation, and may be of, for example, a coin type, a cylindrical type, or a prismatic type.

For example, a coin-type lithium battery can be fabricated in the following manner. A positive electrode complex composed of a positive electrode and a positive electrode current collector is placed in a positive electrode case (e.g., on the inner bottom surface thereof), a separator is placed on the positive electrode complex, and an organic electrolyte is injected. As a result, the positive electrode and the separator are impregnated with the organic electrolyte. Subsequently, a negative electrode is attached to the inner surface of a negative electrode case, and in this state, the negative electrode case is fitted to the opening of a positive electrode case with an electrically insulating packing interposed therebetween, to achieve sealing, whereby a lithium battery is obtained.

The negative electrode may be placed on the separator, and in this state, the negative electrode may be fitted such that the negative electrode is sandwiched between the separator and the negative electrode case. The negative electrode may be attached to a flat portion on the inside of the negative electrode case by press-fitting.
The sealing may be achieved by bending inwardly the opening end of the positive electrode case, and crimping the bent portion onto the periphery of the negative electrode case with the insulating packing interposed therebetween.

A sheathing (e.g., a resin film) may be applied to the surface of the lithium battery as needed.

The positive electrode case and the negative electrode case may be made of any material commonly used for lithium batteries without particular limitation, and may be made of, for example, stainless steel.
The insulating packing is used for the purpose of electrically insulating the positive electrode case from the negative electrode case, and hermetically sealing the battery The insulating packing may comprise, for example, a heat resistant resin material, such as PP, PPS, and PEEK. Among these resins, PPS is preferred because it is excellent in high-temperature resistance, solvent resistance, and moldability

### [Examples]

The present invention is specifically described below by means of the following examples. It should be noted, however, that the present invention is not limited to these examples.

### «Examples 1 to 5 and Comparative Examples 1 to 2»

### (1) Preparation of positive electrode active material (γ-β-type manganese dioxide)

An electrolytic manganese dioxide (available from Tosoh Corporation) was baked in air at 400°C for 4 hours, to give a γ-β-type manganese dioxide to be used as a positive electrode active material. The crystal structure of the resultant manganese dioxide was identified by a powder X-ray diffractometry using CuKα1 radiation, on the basis of peak positions and peak intensities in the diffraction pattern.

The particle size distribution of the γ-β-type manganese dioxide particles was measured by using a flow-type particle image analyzer (brand name: FPIA-3000, available from Sysmex Corporation). Specifically, 5 mL of a liquid sample in which 0.2 g of sample 5γ-β-type manganese dioxide) was dispersed in 100 g of water containing 0.01 % by weight of a surfactant was set on a sample holder, and the image thereof was photographed with the above-mentioned analyzer. The obtained image was used to analyze the image for individual manganese dioxide particle, and a volume-basis particle size distribution of the manganese dioxide particles was calculated. As a result, the average particle size (median size) of the γ-β-type manganese dioxide was 30 µm.

The specific surface area of the γ-β-type manganese dioxide was measured by a BET one-point method. The measuring conditions are shown below. As a result, the BET specific surface area of the γ-β-type manganese dioxide was 24.7 m²/g_{.}
Measuring apparatus: Macsorb HM-1201 available from Mountech Co., Ltd.
Weight of sample: 0.3 to 0.4 g
Condition for dehydration prior to measurement: Dried at 120°C, and then held for 60 min while nitrogen gas was flowing
Gas for adsorption amount measurement: Mixed gas containing helium and nitrogen in a ratio of 7:3 by volume
Temperature condition for adsorption measurement: Decreased from 20°C to -196°C
Temperature condition for desorption measurement: Increased from -196°C to 20°C

### (2) Production of positive electrode

The above-prepared positive electrode active material, Ketjen black (conductive material), and tetrafluoroethylene-hexafluoropropylene copolymer (binder) were mixed together in a ratio of 100:5:5 by weight. An appropriate amount of water was added to the resultant mixture, and kneaded sufficiently, to give a positive electrode material mixture in the form of paste. The positive electrode material mixture was dried at 100°C, and compacted with a predetermined molding die in a hydraulic press machine, to give a disc-like positive electrode (thickness: 2.9 mm, diameter: 18.0 mm).

### (3) Production of negative electrode

Asheet-like lithium metal was punched with a predetermined die, to give a disc-like negative electrode (thickness: 0.12 mm, diameter: 17.4 mm).

### (4) Preparation organic electrolyte

To a non-aqueous solvent containing propylene carbonate (PC) and 1,2-dimethoxyethane (DME) in a ratio of 7:3 by volume, LiClO₄ serving as the supporting salt and methyl 4-hydroxybutyrate serving as the first additive were added and dissolved, to give an organic electrolyte. Here, the concentration of LiClO₄ in the organic electrolyte was set to 0.6 mol/L.

The content of methyl 4-hydroxybutyrate (the first additive) in the organic electrolyte was changed as shown in Table 1.

### (5) Fabrication of battery

The above-prepared positive electrode, negative electrode, and organic electrolyte were used to fabricate a coin-type lithium battery as shown in Fig. 1 in the following procedures. The fabrication of a battery was performed in a dry air with a dew point of -50 °C or lower.

The negative electrode 3 was press-fitted to the inner bottom surface of a negative electrode case 6 made of stainless steel. An insulation packing 7 made of polyphenylene sulfide was mounted on the periphery of the negative electrode case 6. The positive electrode 8 was dried at 250°C for 4 hours. Thereafter, the positive electrode 8 was inserted into a positive electrode current-collecting ring 9 being made of stainless steel and having a cross-sectional shape of the letter "L", to form a positive electrode complex 2. The positive electrode complex 2 was mounted on the inner bottom surface of a positive electrode case 5 made of stainless steel. A separator 4 (thickness: 100 µm) prepared by punching a non-woven fabric made of polyphenylene sulfide into the shape of a circle was mounted on the positive electrode complex 2. The organic electrolyte was injected into the positive electrode case 5, to impregnate the positive electrode 8 and the separator 4 with the organic electrolyte.

Subsequently, the negative electrode case 6 with the negative electrode 3 press-fitted thereto was arranged on the separator 4 such that the negative electrode 3 faced the positive electrode complex 2 with separator 4 interposed therebetween. The opening end of the positive electrode case 5 was crimped onto the periphery of the negative electrode case 6 with an insulating packing 7 interposed therebetween, to hermetically seal the battery A coin-type lithium battery (diameter: 24 mm, height: 5.0 mm) having a design capacity of 500 mAh was fabricated in this manner.

### «Comparative Example 3»

LiClO₄ was added as the supporting salt to a mixed solvent containing PC and DME in a ratio of 6:4 by volume, and dissolved therein, to give an organic electrolyte. Here, the concentration of LiClO₄ in the organic electrolyte was set to 1.0 mol/L.

A lithium battery was fabricated in the same manner as in Example 1, except that the above-prepared organic electrolyte was used.

### [Evaluation]

The above-fabricated batteries of Examples 1 to 5 and Comparative Examples 1 to 3 were subjected to the following evaluations.

### (A) Measurement of initial discharge capacity

Each battery was pre-discharged at a constant current of 3 mA for 5.5 hours, and then allowed to stand at 60°C for 3 days (aging). The appearance of the battery having been allowed to stand was visually inspected and the open circuit voltage (OCV) thereof was measured in a 25°C environment, to make sure that there is no abnormality in any of the batteries.

Next, each battery was discharged at a constant resistance of 10 kΩ until the closed circuit voltage reached 2 V in a 25°C environment, to measure a discharge capacity (initial capacity). Three batteries for each example were evaluated, and the discharge capacities of the three batteries were averaged.

### (B) Evaluation of large-current discharge characteristics

In order to evaluate large-current pulse discharge characteristics in a low temperature environment, each battery was discharged at a constant current of 7.5 mA in a low temperature environment of -20°C for 1 second. The minimum value of closed circuit voltage (hereinafter, "CCV") during discharge was measured. Three batteries for each example were evaluated, and the minimum CCV values of the three batteries were averaged.

### (C) Evaluation of high-temperature storage characteristics

The overall height of each battery immediately after fabrication was measured in a 25°C environment. Thereafter, the battery was stored for 5 days in a high temperature environment of 100 °C. The battery having been stored was transferred into a room temperature environment, to measure an overall height of the battery after storage. The overall height of the battery before storage was subtracted from the overall height of the battery after storage, to determine a difference therebetween as an amount of battery swelling during high temperature storage.

Three batteries for each example were evaluated, and the amounts of battery swelling of the three batteries were averaged.

### (D) Evaluation of large-current discharge characteristics after high temperature storage

Each of the batteries after high temperature storage in (C) above was discharged at a constant current of 7.5 mA for 1 second in a low temperature environment of -20°C. The minimum CCV value during discharge was measured. Three batteries for each example were evaluated, and the minimum CCV values of the three batteries were averaged.

The results of the above evaluations are shown in Table 1.

**[Table 1]**

| | Positive electrode active material | | Organic electrolyte | | Evaluation of initial characteristics | Evaluation of large-current discharge characteristics | Evaluation of high temperature storage characteristics | |
|---|---|---|---|---|---|---|---|---|
| | Content (wt%) | | Content (wt%) | | Initial discharge capacity (mAh) | Minimum CCV value (V) | Battery swelling (mm) | Minimum CCV value after storage (V) |
| | B | Mg | First additive | Second additive | | | | |
| Com. Ex. 3 | 0 | 0 | - | - | 501 | 2.858 | 1.58 | < 0 |
| Com. Ex. 1 | 0 | 0 | 0.0005 | - | 501 | 2.860 | 0.92 | 1.327 |
| Ex. 1 | 0 | 0 | 0.001 | - | 502 | 2.847 | 0.49 | 2.002 |
| Ex.2 | 0 | 0 | 0.05 | - | 500 | 2.855 | 0.46 | 2.196 |
| Ex.3 | 0 | 0 | 0.1 | | 501 | 2.839 | 0.40 | 2.503 |
| Ex.4 | 0 | 0 | 0.5 | - | 499 | 2.821 | 0.39 | 2.506 |
| Ex.5 | 0 | 0 | 1.0 | - | 500 | 2.803 | 0.38 | 2.517 |
| Com. Ex. 2 | 0 | 0 | 1.5 | - | 494 | 2.642 | 0.35 | 1.496 |

The overall height of each battery before storage was within the range of 4.8 to 4.9 mm. The amount of battery swelling in the battery of Comparative Example 3 was over 1 mm, while the amount of battery swelling in the batteries of Examples 1 to 5 was 0.38 to 0.49 mm. In the batteries of Examples 1 to 5, the generation of gas in the interior of the battery namely, the oxidation reaction of the non-aqueous solvent at the positive electrode, in a high temperature environment of 100°C was significantly suppressed as compared to in the battery of Comparative Example 3.

The batteries of Examples 1 to 5 exhibited almost the same levels of initial characteristics and minimum CCV values as the battery of Comparative Example 3. However, after having been exposed to high temperatures, the batteries of Examples 1 to 5 exhibited higher minimum CCV values and more significantly improved large-current discharge characteristics than the battery of Comparative Example 3.

In the batteries of Example 1 to 5, the minimum CCV values after storage were 2.0 V or higher. On the other hand, in the battery of Comparative Example 3 in which the battery swelling was great, the discharge voltage dropped to 0 V or lower, and it was impossible to discharge the battery.

As described above, in the battery of Comparative Example 3, the large-current discharge characteristics after exposure to high temperatures were significantly deteriorated. This is presumably because the battery swelling was great. Specifically, the side reaction between the positive electrode and the organic electrolyte became more likely to occur, and the amount of generated gas was increased, causing degradation in the electrical conductivity between the positive electrode and the positive electrode case and between the negative electrode and the negative electrode case, as well as the ion conductivity between the positive electrode and the negative electrode, in the battery

The batteries of Examples 2 to 4 had more excellent high-temperature storage characteristics, which indicates that the percentage of the first additive (aliphatic hydroxycarboxylic acid ester) in the organic electrolyte is preferably 0.05 to 0.5% by weight.
In particular, in the batteries of Examples 3 to 4, excellent large-current discharge characteristics and high-temperature storage characteristics were obtained in a well-balanced manner, which indicates that the percentage of the first additive in the organic electrolyte is particularly preferably 0.1 to 0.5% by weight.

With respect to the battery of Comparative Example 3, the AC impedance at 1 kHz was measured. As a result, the internal resistance of the battery after having been exposed to a high temperature of 100°C was increased to 100 Ω or more, and the battery was deteriorated so severe that the discharging thereof was impossible.
In the battery of Comparative Example 1, the effect obtained by containing the first additive in the organic electrolyte was small, and the high-temperature storage characteristics were deteriorated.
In the battery of Comparative Example 2, the amount of battery swelling was as small as 0.35 mm; however, the minimum CCV value after high temperature storage was low, and the large-current discharge characteristics were deteriorated.

### <<Example 6>>

An electrolytic manganese dioxide (available from Tosoh Corporation) was mixed with boron oxide (B₂O₃) (available from Kanto Chemical Co., Inc.) and magnesium hydroxide (Mg(OH)₂) (available from Kanto Chemical Co., Inc.) in a ratio of 100:3.5:5.5 by weight. The resultant mixture was baked at 420°C in air for 8 hours, to give a γ-β-type manganese dioxide to be used as a positive electrode active material, the γ-β-type manganese dioxide containing boron and magnesium.

The BET specific surface area and the average particle size of the obtained manganese dioxide were measured in the same manner as in Example 1. The result showed that the BET specific surface area was 15.3 m²/g, and the volume-basis average particle size (median size) was 31 µm.

The boron content and the magnesium content in the γ-β-type manganese dioxide were measured in the following manner.
Hydrochloric acid was added to the manganese dioxide, then heated and dissolved, and diluted as appropriate to give a sample solution. The resultant sample solution was subjected to ICP emission spectrometry to quantify the boron content and the magnesium content. The result showed that the boron content and the magnesium content in the γ-β-type manganese dioxide were 1.0% by weight and 2.1 % by weight, respectively.

To a non-aqueous solvent containing propylene carbonate (PC) and 1,2-dimethoxyethane (DME) in a ratio of 7:3 by volume, LiClO₄ serving as the supporting salt and ethyl 4-hydroxybutyrate serving as the first additive were added and dissolved, to give an organic electrolyte.
Here, the concentration of LiCIO₄ and the content of ethyl 4-hydroxybutyrate in the organic electrolyte were set to 0.6 mol/L and 0.2% by weight, respectively. A lithium battery was fabricated in the same manner as in Example 1, except that the above-prepared positive electrode active material and organic electrolyte were used.

### «Comparative Example 4»

A lithium battery was fabricated in the same manner as in Example 6, except that the organic electrolyte of Comparative Example 3 was used in place of the organic electrolyte of Example 6.

### «Example 7»

An electrolytic manganese dioxide was mixed with boron oxide (B₂O₃) and magnesium oxide (MgO) in a ratio of 100:11:15 by weight. The resultant mixture was baked at 360°C for 12 hours, to give a γ-β-type manganese dioxide to be used as the positive electrode active material.

The BET specific surface area and the average particle size of the obtained manganese dioxide were measured in the same manner as in Example 1. The result showed that the BET specific surface area was 8 m²/g, and the volume-basis average particle size (median size) was 32 µm. The boron content and the magnesium content in the manganese dioxide were measured in the same manner as in Example 6 by an ICP emission spectrometry which were 3% by weight and 5% by weight, respectively.

To a non-aqueous solvent containing PC and DME in a ratio of 6:4 by volume, LiClO₄ serving as the supporting salt and ethyl 4-hydroxybutyrate serving as the first additive were added and dissolved, to give an organic electrolyte.
Here, the concentration of LiCIO₄ and the content of ethyl 4-hydroxybutyrate in the organic electrolyte were set to 1.0 mol/L and 0.001 % by weight, respectively. A lithium battery was fabricated in the same manner as in Example 1, except that the above-prepared positive electrode active material and organic electrolyte were used.

### «Example 8»

An electrolytic manganese dioxide was mixed with boron oxide (B₂O₃) and magnesium hydroxide in a ratio of 100:0.3:0.2 by weight. The resultant mixture was baked at 440°C for 5 hours, to give a γ-β-type manganese dioxide to be used as the positive electrode active material.

The BET specific surface area and the average particle size of the obtained manganese dioxide were measured in the same manner as in Example 1. The result showed that the BET specific surface area was 11.7 m²/g, and the volume-basis average particle size (median size) was 33 µm. The boron content and the magnesium content in the manganese dioxide were 0.1 % by weight and 0.1 % by weight, respectively.

To a non-aqueous solvent containing PC and DME in a ratio of 6:4 by volume, LiClO₄ serving as the supporting salt and ethyl 4-hydroxybutyrate serving as the first additive were added and dissolved, to give an organic electrolyte.
Here, the concentration of LiClO₄ and the content of ethyl 4-hydroxybutyrate in the organic electrolyte were set to 0.6 mol/L and 0.03% by weight, respectively. A lithium battery was fabricated in the same manner as in Example 1, except that the above-prepared positive electrode active material and organic electrolyte were used.

### «Example 9»

To a non-aqueous solvent containing PC and DME in a ratio of 7:3 by volume, LiClO₄ serving as the supporting salt, ethyl 4-hydroxybutyrate serving as the first additive, and ethyl benzenesulfonate as the second additive were added and dissolved, to give an organic electrolyte.

Here, the concentration of LiClO₄ and the content of ethyl 4-hydroxybutyrate in the organic electrolyte were set to 0.6 mol/L and 0.05% by weight, respectively. The content of ethyl benzenesulfonate in the organic electrolyte was set to 3% by weight.

A lithium battery was fabricated in the same manner as in Example 6, except that the above-prepared organic electrolyte was used.

### «Example 10»

To a non-aqueous solvent containing PC and DME in a ratio of 7:3 by volume, LiClO₄ serving as the supporting salt, butyl 4-hydroxybutyrate serving as the additive, and 1,3-propane sultone as the second additive were added and dissolved, to give an organic electrolyte.

Here, the concentration of LiClO₄ and the content of butyl 4-hydroxybutyrate in the organic electrolyte were set to 0.6 mol/L and 0.5% by weight, respectively. The content of 1,3-propane sultone in the organic electrolyte was set to 0.1 % by weight.

A lithium battery was fabricated in the same manner as in Example 6, except that the above-prepared organic electrolyte was used.

The batteries of Examples 6 to 10 and Comparative Example 4 were evaluated in the same manner as the batteries of Examples 1 to 5 and Comparative Examples 1 to 3. The results are shown in Table 2 along with the results of Comparative Example 3.

**[Table 2]**

| | Positive electrode active material | | Organic electrolyte | | Evaluation of initial characteristics | Evaluation of large-current discharge characteristics | Evaluation of high temperature storage characteristics | |
|---|---|---|---|---|---|---|---|---|
| | Content (wt%) | | Content (wt%) | | Initial discharge capacity (mAh) | Minimum CCV value (V) | Battery swelling (mm) | Minimum CCV value after storage (V) |
| | B | Mg | First additive | Second additive | | | | |
| Com. Ex. 3 | 0 | 0 | - | - | 501 | 2.858 | 1.58 | < 0 |
| Ex.6 | 1.0 | 2.1 | 0.2 | - | 489 | 2.747 | 0.24 | 2.552 |
| Com. Ex. 4 | 1.0 | 2.1 | - | - | 492 | 2.826 | 1.03 | 1.027 |
| Ex.7 | 3 | 5 | 0.001 | - | 477 | 2.715 | 0.21 | 2.438 |
| Ex.8 | 0.1 | 0.1 | 0.03 | - | 498 | 2.806 | 0.25 | 2.616 |
| Ex.9 | 1.0 | 2.1 | 0.05 | 3.0 | 485 | 2.774 | 0.18 | 2.604 |
| Ex. 10 | 1.0 | 2.1 | 0.5 | 0.1 | 488 | 2.798 | 0.19 | 2.593 |

All batteries exhibited a favorable initial capacity The initial discharge capacities of the batteries of Examples 6 to 10 using the manganese dioxide containing boron and magnesium were slightly smaller than that of the battery of Comparative Example 3. This is presumably because due to the addition of boron and magnesium to the manganese dioxide, the valence of manganese was decreased, and the crystallinity of the manganese dioxide was slightly reduced.
The initial discharge capacity of the battery of Comparative Example 4 to which boron and magnesium had been added was also slightly smaller than the battery of Comparative Example 3.

The minimum CCV values of the batteries of Examples 6 to 10 (about 2.72 to 2.81 V) were lower than those (2.83 to 2.86 V) of the batteries Comparative Examples 3 and 4. This is presumably because due to the use of the organic electrolyte containing the first additive (aliphatic hydroxycarboxylic acid ester), the discharge reaction was inhibited.

The amounts of battery swelling in the batteries of Examples 6 to 10 were 0.18 to 0.25 mm, while the amounts of battery swelling in the batteries of Comparative Examples 3 and 4 were over 1 mm. In the batteries of Examples 6 to 10, the generation of gas in the interior of the battery namely, the oxidation reaction of the non-aqueous solvent at the positive electrode, in a high temperature environment of 100°C was significantly suppressed as compared to in the batteries of Comparative Examples 3 and 4.
In the battery of Comparative Example 4, although the battery swelling after high temperature storage was suppressed as compared to in the battery of Comparative Example 3, the amount of battery swelling was over 1.0 mm, which indicates that the suppression of the generation of gas during storage at high temperatures was still insufficient.

In the batteries of Examples 6 to 10, as compared to in the batteries of Examples 1 to 5, the amounts of battery swelling were further decreased, and the minimum CCV values after storage were increased.
The foregoing results show that: by using an organic electrolyte containing an aliphatic hydroxycarboxylic acid ester such as hydroxybutyric acid ester in combination with a γ-β-type manganese dioxide containing boron, magnesium, and the like, the high-temperature storage characteristics are further improved; and by adding a first additive (aliphatic hydroxycarboxylic acid ester) and further adding a second additive (aromatic sulfone compound and/or cyclic sultone compound) to the organic electrolyte, the high-temperature storage characteristics are furthermore improved.

In the batteries of Examples 6 to 10, the minimum CCV values were 2.4 V or higher. On the other hand, in the battery of Comparative Example 3 in which the battery swelling was great, the discharge voltage dropped to 0 V or lower, and it was impossible to discharge the battery In the battery of Comparative Example 4, the minimum CCV value after storage was significantly reduced as compared to that before storage, to be 1.027 V.
As described above, in the batteries of Comparative Examples 3 and 4, the large-current discharge characteristics at low temperatures after exposure to high temperatures were significantly deteriorated, which is presumably because the battery swelling was great. Specifically, the side reaction between the positive electrode and the organic electrolyte became more likely to occur, and the amount of generated gas was increased in a high temperature environment. As a result, the electron conductivity between the positive electrode and the positive electrode case and between the negative electrode and the negative electrode case, as well as the ion conductivity between the positive electrode and the negative electrode, in the battery, were deteriorated.

Although methyl 4-hydroxybutyrate was used in Examples 1 to 6, ethyl 4-hydroxybutyrate was used in Examples 7 to 9, and butyl 4-hydroxybutyrate was used in Example 10, an alkyl ester of an aliphatic hydroxycarboxylic acid other than these may be used with effects similar to those obtained in Examples 1 to 10.

Although ethyl benzenesulfonate was used in Example 9, an aromatic sulfone compound other than this may be used with effects similar to those obtained in Example 9.

Although 1,3-propane sultone was used in Example 10, a cyclic sultone compound other than this may be used with effects similar to those obtained in Example 10.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Industrial Applicability]

The lithium battery of the present invention has excellent large-current discharge characteristics and high-temperature storage characteristics, and is excellent in terms of cost. Such a lithium battery can be suitably used, for example, as a power source for electronic devices such as cellular phones, or for an application to be exposed to high temperatures (e.g., for devices for automobiles such as a pressure sensor mounted inside a tire).

### [Reference Signs List]

1. Battery
2. Positive electrode complex
3. Negative electrode
4. Separator
5. Positive electrode case
6. Negative electrode case
7. Insulating packing
8. Positive electrode
9. Positive electrode current-collecting ring

## Claims

1. A lithium battery comprising:
a positive electrode including manganese dioxide as a positive electrode active material;
a negative electrode including at least one selected from lithium metal and a lithium alloy, as a negative electrode active material;
a porous insulating member interposed between the positive electrode and the negative electrode; and
an organic electrolyte,
wherein the organic electrolyte contains 0.0008 to 1.2% by weight of an alkyl ester of an aliphatic hydroxycarboxylic acid.

2. The lithium battery in accordance with claim 1, wherein the percentage of the alkyl ester is 0.001 to 1 % by weight.

3. The lithium battery in accordance with claim 1, wherein the alkyl ester is a C₁₋₆ alkyl ester of an aliphatic hydroxycarboxylic acid having 2 to 7 carbon atoms.

4. The lithium battery in accordance with claim 1, wherein the alkyl ester is a C₁₋₄ alkyl hydroxybutyrate.

5. The lithium battery in accordance with claim 1, wherein the alkyl ester is a C₁₋₄ alkyl 4-hydroxybutyrate.

6. The lithium battery in accordance with claim 1, wherein the organic electrolyte includes: a mixed solvent of at least one selected from a chain carbonate, a cyclic ether, and a chain ether, and a cyclic carbonate; a lithium salt dissolved in the mixed solvent; and the alkyl ester.

7. The lithium battery in accordance with claim 1, wherein the organic electrolyte contains at least one additive selected from an aromatic sulfone compound and a cyclic sultone compound.

8. The lithium battery in accordance with claim 7, wherein the organic electrolyte contains the at least one additive in an amount of 0.1 to 3% by weight.

9. The lithium battery in accordance with claim 1, wherein the manganese dioxide is a γ-β manganese dioxide.

10. The lithium battery in accordance with claim 9, wherein the γ-β manganese dioxide contains at least one selected from boron and magnesium.

11. The lithium battery in accordance with claim 10, wherein the γ-β manganese dioxide contains boron in an amount of 0.1 to 3% by weight and magnesium in an amount of 0.1 to 5% by weight.

## Amended claims

### Amended claims in accordance with Rule 137(2) EPC.

**1.** Amended) A lithium battery comprising:
a positive electrode including manganese dioxide as a positive electrode active material;
a negative electrode including at least one selected from lithium metal and a lithium alloy, as a negative electrode active material;
a porous insulating member interposed between the positive electrode and the negative electrode; and
an organic electrolyte,
wherein the organic electrolyte contains 0.0008 to 1.2% by weight of an alkyl ester of an aliphatic hydroxycarboxylic add, and
the alkyl ester is a C₁₋₄ alkyl hydroxybutyrate.

**2.** The lithium battery in accordance with claim 1, wherein the percentage of the alkyl ester is 0.001 to 1 % by weight.

**3.** Cancelled)

**4.** Cancelled)

**5.** The lithium battery in accordance with claim 1, wherein the alkyl ester is a C₁₋₄ alkyl 4-hydroxybutyrate.

**6.** The lithium battery in accordance with claim 1, wherein the organic electrolyte includes: a mixed solvent of at least one selected from a chain carbonate, a cyclic ether, and a chain ether, and a cyclic carbonate; a lithium salt dissolved in the mixed solvent; and the alkyl ester.

**7.** The lithium battery in accordance with claim 1, wherein the organic electrolyte contains at least one additive selected from an aromatic sulfone compound and a cyclic sultone compound.

**8.** The lithium battery in accordance with claim 7, wherein the organic electrolyte contains the at least one additive in an amount of 0.1 to 3% by weight.

**9.** The lithium battery in accordance with claim 1, wherein the manganese dioxide is a γ-β manganese dioxide.

**10.** The lithium battery in accordance with claim 9, wherein the γ-β manganese dioxide contains at least one selected from boron and magnesium.

**11.** The lithium battery in accordance with claim 10, wherein the γ-β manganese dioxide contains boron in an amount of 0.1 to 3% by weight and magnesium in an amount of 0.1 to 5% by weight.

Statement under Art. 19.1 PCT
The technical feature of claim 4 has been incorporated into claim 1, and claim 4 has been cancelled. Due to this amendment, claim 3 has been cancelled.
